(19) **Europäisches Patentamt / European Patent Office / Office européen des brevets**

(11) **EP 1 927 912 B1**

(12) **EUROPEAN PATENT SPECIFICATION**

(45) Date of publication and mention
of the grant of the patent:
**28.11.2012 Bulletin 2012/48**

(51) Int Cl.:
**G05B 19/418** (2006.01)     **B29C 45/76** (2006.01)

(21) Application number: **06810465.2**

(86) International application number:
**PCT/JP2006/318887**

(22) Date of filing: **22.09.2006**

(87) International publication number:
**WO 2007/034926 (29.03.2007 Gazette 2007/13)**

(54) **PRODUCTION STATUS DISPLAY AND PRODUCTION STATUS DISPLAY METHOD OF MOLDING MACHINE**

PRODUKTIONSSTATUSANZEIGE UND PRODUKTIONSSTATUSANZEIGEVERFAHREN FÜR EINE SPRITZGIESSMASCHINE

AFFICHAGE D'ETAT DE PRODUCTION ET PROCEDE D'AFFICHAGE D'ETAT DE PRODUCTION DE MACHINE DE MOULAGE

(84) Designated Contracting States:
**AT CH DE IT LI**

(30) Priority: **22.09.2005 JP 2005275796**

(43) Date of publication of application:
**04.06.2008 Bulletin 2008/23**

(73) Proprietor: **SUMITOMO HEAVY INDUSTRIES, LTD.**
**Shinagawa-ku,**
**Tokyo 141-8686 (JP)**

(72) Inventor: **HANO, Katsunobu**
**Chiba-shi, Chiba 2630001 (JP)**

(74) Representative: **Geyer, Ulrich F.**
**Wagner & Geyer**
**Patentanwälte**
**Gewürzmühlstrasse 5**
**80538 München (DE)**

(56) References cited:
**JP-A- 11 227 017     JP-A- 2002 318 610**
**JP-A- 2004 167 962     JP-A- 2004 167 962**

**Description**

TECHNICAL FIELD

The present invention relates to a production status display apparatus and a production status display method for molding machines.

BACKGROUND ART

Conventionally, in a molding machine; for example, in an injection-molding machine, resin heated and melted within a heating cylinder is injected under high pressure and charged into a cavity of a mold apparatus, and the injected resin is cooled and solidified in the cavity. Subsequently, a molded product is removed from the mold apparatus.
The injection-molding machine includes the mold apparatus, a mold-clamping apparatus, an injection apparatus, etc. The mold-clamping apparatus includes a stationary platen and a movable platen. The movable platen is advanced and retreated through drive of a mold-clamping motor to thereby perform mold closing, mold clamping, and mold opening.
Meanwhile, the injection apparatus includes a heating cylinder for heating and melting resin fed from a hopper, and an injection nozzle for injecting the molten resin. A screw is disposed within the heating cylinder so as to be able to rotate, and so as to be able to advance and retreat. When the screw is rotated through drive of a metering motor, metered resin is accumulated forward of the screw within the heating cylinder. When the screw is advanced through drive of an injection motor, the resin accumulated forward of the screw is injected and charged into a cavity of the mold apparatus in a clamped state.
When the resin within the cavity is cooled to complete a molded product and mold opening is performed, an ejector pin is advanced through drive of an ejection motor of an ejector apparatus, whereby the molded product is ejected and separated from the mold.
Incidentally, in a molding machine management system for centrally managing a plurality of injection molding machines at a single location, a personal computer is connected to each injection molding machine via a network, and data for operating each injection molding machine and data obtained through operation of each injection molding machine are centrally managed at the personal computer.
For such central management, various sensors are provided on each injection molding machine, and various pieces of information are collected at each injection molding machine on the basis of results detected by means of the sensors. By means of a program, the personal computer, which includes memory, display, etc., acquires the various pieces of information from each injection molding machine, processes them, and records the results of the processing in the memory. Further, the personal computer forms a management screen on the display, and displays, on the management screen, an operation record, as management information, the operation record representing a past operation status of each injection molding machine.

For example, the management screen is divided into areas corresponding to the individual injection molding machines, and operation records of the individual injection molding machines are displayed in the corresponding areas. Each operation record includes a ratio of time over which an injection molding machine stopped within a predetermined past period of time, a ratio of time over which an anomaly occurred in the injection molding machine within the predetermined past period of time, a ratio of time over which power of the injection molding machine was cut off within the predetermined past period of time, and a ratio of time over which the injection molding machine was operated within the predetermined past period of time (see, for example, JP-A-2003-1686).
JP-A-2004-167962 discloses a method for displaying the progress of manufacture on molding machines simultaneously. The progress of manufacture on each molding machine is shown on a screen of a display device installed on a management device for a multiple machine management system which manages a plurality of molding machines. The display device displays the state of operation on the screen in which the states of operation of all the molding machines are collectively shown in a split screen. In the state-of-operation image, the progress of molding work from the beginning to the present moment by an individual molding machine is shown in a bar chart D1 in the split section of the screen for the machine.
JP-A-2002-318610 discloses a load adjustment supporting device with a monitoring means and a load adjusting means, and connected through a network to a server in which manufacture instruction data to a plurality of manufacturing devices, production result data indicating the production result of each manufacturing device, and operation data indicating the operating situation of each manufacturing device are stored. The monitoring means outputs monitoring information for supporting load adjustment based on any of the manufacture instruction data, production result data, or operation data, or all the data. Also, the load adjusting means execute load adjustment by moving the manufacture instruction information to the specific manufacturing device included in the manufacture instruction data stored in the server as the manufacture instruction information to another specific manufacturing device.

DISCLOSURE OF THE INVENTION

PROBLEMS TO BE SOLVED BY THE INVENTION

However, the above-described conventional molding machine management system cannot grasp the production status of each injection molding machine; i.e., the status of product molding at each injection molding machine, although the system can grasp the past operation record of each injection molding machine. Accordingly, the conventional molding machine managing system cannot recognize a production end time, which is a time at which molding of all products is completed and their production ends.

An object of the present invention is to solve the above-mentioned problems in the conventional molding machine management system, and to provide a production status display apparatus and a production status display method for molding machines, which can grasp the production status of each molding machine and recognize the production end time.

MEANS FOR SOLVING THE PROBLEMS

In order to achieve the above object, a production status display apparatus and method for molding machines according to the present invention is provided as set forth in claims 1 and 9, respectively.
Preferred embodiments of the present invention may be gathered from the dependent claims.

Since the scheduled progress status of each molding machine is displayed on the screen, it can be judged at a glance which molding machine will end production earlier than others. Accordingly, the production status of each molding machine can be grasped, and the production end time can be recognized. As a result, a production plan can be made easily, and an efficient production process can be planned.

BRIEF DESCRIPTION OF DRAWINGS

FIG. 1 is a diagram showing a molding machine management system according to a first embodiment of the present invention.
FIG. 2 is a control block diagram of the molding machine management system according to the first embodiment of the present invention.
FIG. 3 is an illustration showing an example summary display screen according to the first embodiment of the present invention.
FIG. 4 is an illustration showing an example production progress display screen according to the first embodiment of the present invention.
FIG. 5 is an illustration showing an example production progress display screen according to a second embodiment of the present invention.

BEST MODE FOR CARRYING OUT THE INVENTION

Embodiments of the present invention will next be described in detail with reference to the drawings. Notably, there will be described a molding machine management system which manages individual injection molding machines as a plurality of molding machines.

The molding machine management system constitutes a production status display apparatus for molding machines.

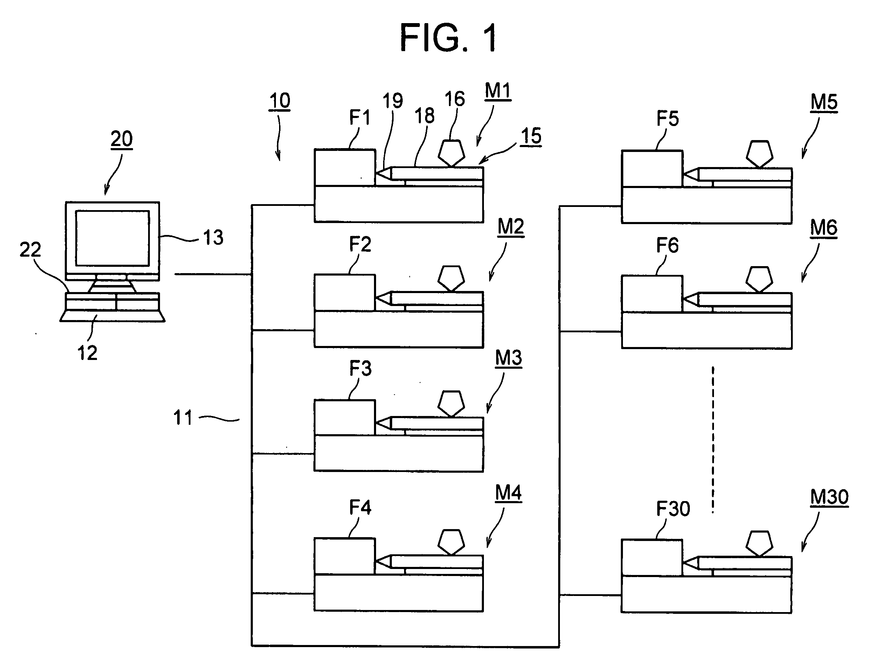

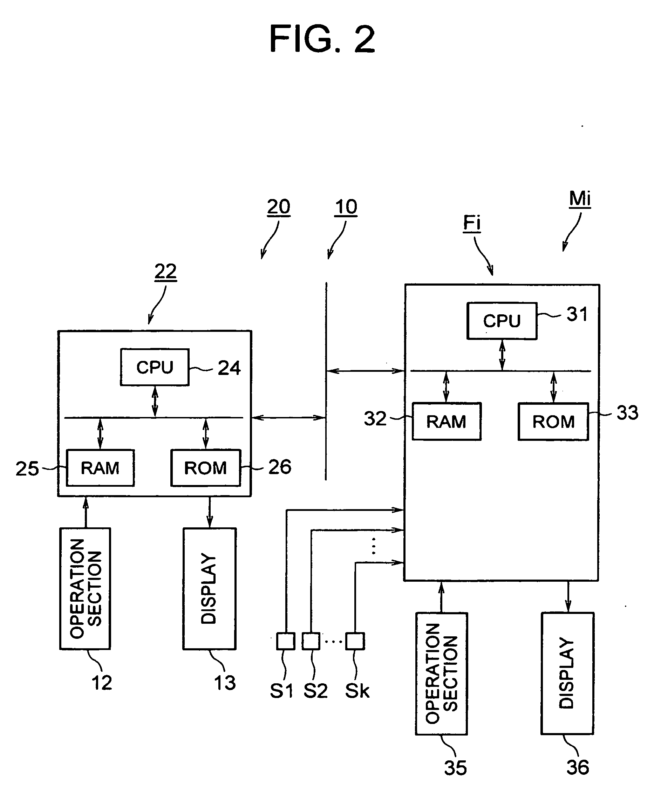

FIG. 1 is a diagram showing a molding machine management system according to a first embodiment of the present invention. FIG. 2 is a control block diagram of the molding machine management system according to the first embodiment of the present invention.

In these drawings, 10 denotes a molding machine management system; Mi (i = 1, 2, . . . , 30) denotes a plurality of (in the present embodiment, 30) injection molding machines; 20 denotes a personal computer serving as a management apparatus which centrally manages the injection molding machines Mi; 11 denotes a network which connects the personal computer 20 and the injection molding machines Mi; and Fi (i = 1, 2, . . . , 30) denotes control sections (controllers) of the injection molding machines Mi. In the present embodiment, a main control section 22 is provided at the personal computer 20: however, the management apparatus may be formed by the control section of at least one of the injection molding machines Mi.

The main control section 22 includes a CPU (arithmetic unit) 24, a RAM 25 which is used as a working memory when the CPU 24 performs various types of arithmetic processing; a ROM 26 which stores a control program and various data; etc. The main control section 22 is connected to an operation section 12 composed of an operation panel, a keyboard, or the like; and a display (display apparatus serving as a display section) 13 composed of a CRT, a liquid-crystal display, or the like. Like the main control section 22, each control section Fi includes a CPU (arithmetic unit) 31, a RAM 32, a ROM 33, etc. Each control section Fi is connected to an operation section 35 composed of an operation panel, a keyboard, or the like; a display (display apparatus serving as a display section) 36 composed of a CRT, a liquid-crystal display, or the like; sensors (information detection sections) Sj (j = 1, 2, · · · , k) provided at relevant locations of each injection molding machine Mi; etc.

The above-described CPUs 24 and 31 function as a computer on the basis of various programs, data, etc., individually or as a whole. The RAMs 25 and 32, and the ROMs 26 and 33, etc. constitute a recording apparatus. In place of the CPUs 24 and 31, an MPU or the like may be used.

Each of the injection-molding machines Mi includes an unillustrated mold apparatus, an unillustrated mold-clamping apparatus, an injection apparatus 15, etc. The mold-clamping apparatus includes a stationary platen and a movable platen. The movable platen is advanced and retreated through drive of a mold-clamping motor (a drive section for mold clamping) to thereby perform mold closing, mold clamping, and mold opening of the mold apparatus.

Meanwhile, the injection apparatus 15 includes a heating cylinder (cylinder member) 18 for heating and melting unillustrated resin (molding material) fed from a hopper 16, and an injection nozzle 19 for injecting the molten resin. An unillustrated screw is disposed within the heating cylinder 18 so as to be able to rotate, and so as to be able to advance and retreat. When the screw is rotated through drive of an unillustrated metering motor (a drive section for metering), molten resin of a predetermined amount is accumulated forward of the screw within the heating cylinder 18. When the screw is advanced through drive of an unillustrated injection motor (a drive section for injection), the resin accumulated forward of the screw is injected and charged into a cavity of the mold apparatus in a clamped state.

When mold opening is performed after the resin within the cavity is cooled to complete a molded product, an ejector pin is advanced through drive of an ejection motor (a drive section for ejection) of an unillustrated ejector apparatus, whereby the molded product is ejected and separated from the mold.

In each control section Fi, unillustrated molding-machine-information acquisition processing means (a molding-machine-information acquisition processing section) of the CPU 31 performs molding-machine-information acquisition processing so as to acquire molding machine information, such as actual values, running status values, setting values, which represent the operation status of each injection molding machine Mi.

For such information acquisition, the molding-machine-information acquisition processing means reads sensor outputs from each of the sensors Si to thereby acquire, as actual values, detected control quantities, such as temperature, pressure, speed, time, and position, detected by means of each of the sensors Si. For example, as to temperature, heating cylinder temperature, mold temperature, resin temperature, etc. are acquired as actual values. As to pressure, injection pressure, mold-clamping force, screw back-pressure, resin pressure, holding pressure, etc. are acquired as actual values. As to speed, screw speed, mold open/close speed, screw rotational speed, etc. are acquired as actual values. As to time, charging time, pressure-holding time, cooling time, metering time, molding cycle time, actual running time (representing actual running performance of the injection molding machine Mi), etc. are acquired as actual values. As to position, screw position, pressure-holding end position, metering position, V-P changeover position, mold open/close position, etc. are acquired as actual values.

As to the charging time, there can be obtained, for example, a time duration between start of charging and start of pressure holding, a time duration between an arbitrary time and start of pressure holding, or the like. The actual running time can be obtained as follows. A running signal is read from each injection molding machine Mi, and a time T1 over which the injection molding machine Mi is stopped and a time T2 over which the injection molding machine Mi is operated are clocked on the basis of the running signal. An anomalous signal is read from each injection molding machine Mi, and a time T3 over which an anomaly occurs in the injection molding machine Mi is clocked. A power signal is read from each injection molding machine Mi, and a time T4 over which power of the injection molding machine Mi is cut off is clocked. Notably, the molding-machine-information acquisition processing means can also calculate and obtain ratios $\eta T1$ to $\eta T4$, which represent the ratios of times T1 to T4 to a predetermined past time Ta.

As to the screw position, pre-charging screw position, cushion position, etc. can be acquired.

Incidentally, in each injection molding machine Mi, before products are molded, trial molding is repeated until a satisfactory product is obtained, whereby molding conditions are established. Subsequently, full-automatic operation for mass production is started. When an operator enters an instruction for starting the full-automatic operation by operating an operation section 35 (input means), unillustrated molding processing means (a molding processing section) of the CPU 31 performs molding processing to thereby start the full-automatic operation.

At that time, the molding-machine-information acquisition processing means acquires a full-automatic-operation start signal, which indicates that full-automatic operation has been started, as a running status value, which represents the operation status of the injection molding machine Mi. The molding-machine-information acquisition processing means also acquires, as a set value, a scheduled total production number, which represents the total number of products to be molded at the injection molding machine Mi. Every time each molding cycle ends, the molding-machine-information acquisition processing means acquires, as actual values, control quantities detected by means of the sensors Sj, a molding cycle time Tm required to perform molding of a single shot, and an actual production number Np, which represents the number of products molded through the single-shot molding.

Subsequently, unillustrated molding-machine-information record processing means (a molding-machine-information record processing section) of the CPU 31 performs molding-machine-information record processing to thereby record the above-described various actual values in the RAM 32. Further, unillustrated molding-machine-information report processing means (a molding-machine-information report processing section) of the CPU 31 performs molding-machine-information report processing so as to transmit to the personal computer 20 the running status values, the set values, etc., as well as the above-described actual values.

In the personal computer 20, unillustrated operation-status-acquisition processing means (an operation-status-acquisition processing section) of the CPU 24 performs operation-status-acquisition processing so as to receive the actual values, the running status values, the set values, etc. transmitted from each injection molding machine Mi. Unillustrated information processing means (an information processing section) of the CPU 24 performs information processing so as to process, for each injection molding machine Mi, the acquired actual values, the running status values, the set values, etc. on the basis of a predetermined management program, and records the processing results in the RAM 25 as management data. Depending on the type, the acquired actual values are directly transmitted to the personal computer 20 as molding machine information, without being recorded in the RAM 32, and the acquired actual values are recorded in the RAM 25 as management data.

Further, unillustrated display processing means (a display processing section) of the CPU 24 performs display processing so as to read the management data from the RAM 25, forms a predetermined screen (in the present embodiment, a management screen) on the display 13, and displays management information (in the present embodiment, the production status of each injection molding machine Mi) on the management screen.

Incidentally, on the display 13, the management screen is divided into areas corresponding to the individual injection molding machines Mi, and the production statuses of the individual injection molding machines Mi are displayed in the corresponding areas as a summary. Therefore, the display processing means forms a summary display screen on the management screen.

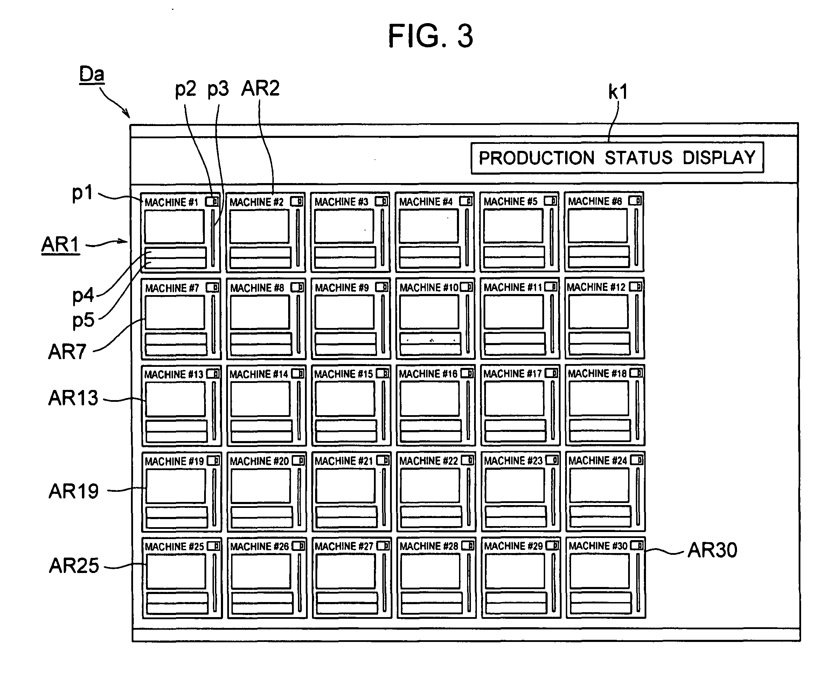

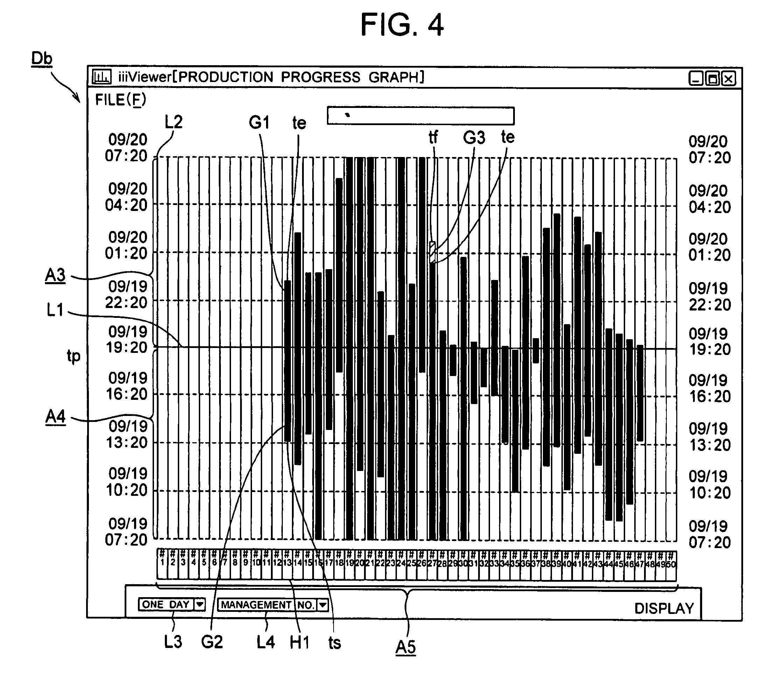

FIG. 3 is an illustration showing an example summary display screen according to the first embodiment of the present invention. FIG. 4 is an illustration showing an example production progress display screen according to the first embodiment of the present invention.

In these drawings, Da denotes the summary display screen, and ARi (i = 1, 2, · · ·, 30) denotes areas which are formed through division of the summary display screen Da and in which the production statuses of the individual injection molding machines Mi (individual machines) are displayed. The display processing means displays, as a summary, the production statuses of the individual injection molding machines Mi on the summary display screen Da in real time.

In each area ARi, the display processing means displays the number of the corresponding injection molding machine Mi (e.g., "machine #1") in an upper left portion p1, a count value C (numerical value) of a molding condition change counter in an upper right portion p2, a 24-hour production status graph (24-hour operation status graph; bar graph) in a right side portion p3, and a shot number and a cycle time (numerical values) in lower portions p4 and p5. The molding condition change counter is provided in the main control section 22 (FIG. 2) and performs counting operation.

Notably, in each control section Fi, unillustrated molding-condition-change determination processing means (a molding-condition-change determination processing section) of the CPU 31 performs molding-condition-change determination processing so as to determine whether the molding conditions are changed. When the molding conditions are changed, the molding-condition-change determination processing means transmits to the personal computer 20 information indicating this fact. Then, in the main control section 22, unillustrated molding-condition-change-time count processing means (a molding-condition-change-time count processing section) of the CPU 24 performs molding-condition-change-time count processing so as to count the number of times of changes by use of the molding condition change counter provided in the main control section 22 every time the molding conditions are changed.

The display processing means then displays, as a count value C, the number of times the molding conditions were changed in the period between the start of molding and the present time. Notably, the display processing means can reset the count value C if needed.

The 24-hour production status graph shows the production status of each corresponding injection molding machine Mi in the past 24 hours as counted from the present time, by use of a single bar in which operating time and non-operating time are colored differently. For such display, the display processing means reads a time ts over which each injection molding machine Mi was stopped and a time td over which each injection molding machine Mi was operated, and displays them in the form of a bar graph.

A production-status display key k1 (a production-status display instructing area) is formed at an upper portion of the summary display screen Da. When an operator clicks the production-status display key k1, the display processing means forms on the management screen a production progress display screen Db, which is linked to the summary display screen Da. Notably, the display processing means not only can selectively form the summary display screen Da and the production progress display screen Db through switching, but also can form the production progress display screen Db as a pop-up screen on the summary display screen Da.

In the production progress display screen Db, L1 denotes a present-time display line for displaying the present time tp, which serves as a reference for display when the progress statuses (productions statuses) of the plurality of injection molding machines Mi are displayed; L2 denotes a time axis serving as an index for representing the production statues; L3 denotes a display range selection area for selecting a display range of the time axis L2; L4 denotes a molding-machine-identifier selection area for switching the identifiers of the injection molding machines Mi; A3 denotes a scheduled progress status display area for displaying scheduled progress statuses each of which represents a scheduled production status calculated on the basis of a molding cycle time and a scheduled number of products to be produced from the present time tp, which is the reference for display); A4 denotes an actual production status area for displaying actual production statuses each calculated on the basis of an actual number of products produced in the period between the start of molding and the present time;

and A5 denotes a molding machine identifier area for identifying the individual injection molding machines Mi.

The molding machine identifiers displayed in the molding machine identifier area A5 change in accordance with a display mode selected in the molding-machine-identifier selection area L4. For example, respective management numbers of the individual injection molding machines Mi managed by the personal computer 20 are displayed in the molding machine identifier area A5 such that they are successively arranged adjacent to one another in the lateral direction. The molding machine identifiers are not necessarily limited to the management numbers. Product names, mold names, or the like may be displayed as the molding machine identifiers through selection of "product name" (the names of products to be molded), "mold name" (the names of mold apparatuses), or the like in the molding-machine-identifier selection area L4. For example, when the "product name" is selected, "cap 1," "cap 2," "lens 1," "lens 2," etc. are displayed as the molding machine identifiers H1.

Further, above the molding machine identifiers H1, along the time axis L2, the scheduled progress status display area A3 is formed on the upper side of the present time display line L1, and the actual production status area A4 is formed on the lower side of the present time display line L1. For example, along the time axis L2 of FIG. 4, a time range between 7:20 on September 19 and 7:20 on September 20 is displayed, because the present time tp is 19:20 on September 19, and "one day" is selected in the display range selection area L3 as a display range. For example, when "one week" is selected in the display range selection area L3 as a display range, a time range of 3.5 days before the present time and a time range of 3.5 days after the present time are displayed on the lower and upper side of the present time tp. When "three days" is selected in the display range selection area L3 as a display range, a time range of 1.5 days before the present time and a time range of 1.5 days after the present time are displayed on the lower and upper side of the present time tp.

Further, in the scheduled progress status display area A3, the time between the present time tp (starting point) and a production end time te, at which the production ends; i.e., a scheduled progress status $\tau f$, which serves as a first production status index representing the production status of each injection molding machine Mi, is displayed by means of a bar graph element (a portion of each bar located on the upper side of the present time tp) G1 (e.g., a bar graph element of red (first color)).

For such display, unillustrated scheduled-progress-status calculation processing means (a scheduled-progress-status calculation processing section), which serves as first-production-status-index calculation processing means (a first-production-status-index calculation processing section), of the CPU 24 performs scheduled-progress-status calculation processing, which serves as first-production-status-index calculation processing, so as to read the scheduled total production number NT, the actual production number Np, and the molding cycle time Tm transmitted from each injection molding machine Mi, and calculates a scheduled production number Nf, which represents the number of products to be molded further, on the basis of the scheduled total production number NT and the actual production number Np.

$$Nf = NT - Np$$

Subsequently, the scheduled-progress-status calculation processing means calculates a scheduled progress status $\tau f$ in unit of time on the basis of the scheduled production number Nf and the molding cycle time Tm.

$$\tau f = Nf \times Tm$$

In this case, the molding cycle time of a predetermined shot may be used as the molding cycle time Tm. When the molding cycle time of the latest shot is used as the molding cycle time of a predetermined shot, the molding cycle time, which is transmitted from each injection molding machine Mi every time a molding cycle for one shot ends, can be used as is. Further, a moving average of molding cycle times for a predetermined number of past shots; e.g., 10 past shorts, may be used.

Further, unillustrated production-end-time calculation processing means (a production-end-time calculation processing section) of the CPU 24 performs production-end-time calculation processing so as to calculate the production end time te, which represents the production status of each injection molding machine Mi, by adding the scheduled progress status $\tau f$ to the present time tp.

$$te = tp + \tau f$$

The display processing means displays the scheduled progress status $\tau f$ in the scheduled progress status display area A3 by use of the bar graph element G1. Notably, if necessary, the display processing means can display the production end time te at a predetermined location of the production progress status display screen Db by use of display elements such as numerals.

Meanwhile, in the actual production status area A4, the time between the production start time ts (starting point) at which a full-automatic operation start signal is transmitted from each injection molding machine Mi, and the present time tp; i.e., an actual production status $\tau p$, which serves as a second production status index representing the production status of each injection molding machine Mi, is displayed by means of a bar graph element (a portion of each bar located on the lower side of the present time tp) G2 (e.g., a bar graph element of blue (second color)).

For such a display, unillustrated actual-production-status calculation processing means (an actual-production-status calculation processing section), which serves as second-production-status-index calculation processing means (a second-production-status-index calculation processing section), of the CPU 24 performs actual-production-status calculation processing, which serves as second-production-status-index calculation processing, so as to read a full-automatic operation start signal transmitted from each injection molding machine Mi, and calculates, as an actual production status τp, a time up to the present time tp on the basis of the production start time ts.

On the basis of the production start time ts, the display processing means displays the actual production status τp in the actual production status area A4 such that the actual production status τp and the scheduled progress status τf are adjacent each other in the vertical direction. In this case, with progress of time, the color of the bar graph element G1 changes from red to blue at a position corresponding to the preset time.

For example, when the molding machine identifiers H1 are molding machine identification numbers, above "#13" representing the injection molding machine M13 (machine #13), the scheduled progress status τf of the injection molding machine M13 is displayed by the bar graph element G1, and the actual production status τp thereof is displayed by the bar graph element G2. The scheduled progress status τf of the injection molding machine M13 shows that the production end time te is between 22:20 on September 19 and 1:20 on September 20. Further, the actual production status τp shows that the full-automatic operation was started and mass-production molding was started around 13:20 on September 19. Accordingly, an operator can grasp at a glance an approximate time elapsed after start of the full-automatic production up to the present, and when the production will end.

Notably, on the right side of the above-mentioned molding machine identification number in the molding machine identifier area A5, the scheduled progress statuses τf and the actual production statuses τp of the injection molding machines M14 to M47 are displayed by means of the bar graph elements on the common time axis.

As described above, in the present embodiment, since the scheduled progress statuses τf of the individual injection molding machines Mi are displayed side by side on the common time axis, it is possible to grasp at a glance which injection molding machine ends the production early. Accordingly, it is possible to grasp the production status of each injection molding machine and recognize the production end time. As a result, a production plan can be made easily, and an efficient production process can be planed.

In the present embodiment, at each injection molding machine Mi, control quantities detected by means of the sensors Sj, the molding cycle time required to perform molding of a single shot, and the actual production number, which represents the number of products molded through the shot molding, are obtained as actual values and transmitted to the personal computer 20 each time the molding cycle ends. Subsequently, at the personal computer 20, the scheduled progress status τf and the actual production status τp are calculated and displayed. However, the present embodiment may be modified such that the personal computer 20 transmits a production-status calculation command to each injection molding machine Mi, and the control section Fi of each injection molding machine Mi calculates the scheduled progress status τf and the actual production status τp.

In this case, unillustrated scheduled-progress-status calculation processing means (a scheduled-progress-status calculation processing section), which serves as unillustrated production-status-index calculation processing means (a production-status-index calculation processing section) of the CPU 31, performs scheduled-progress-status calculation processing (production-status-index calculation processing) to thereby calculate the scheduled progress status τf; and unillustrated actual-production-status calculation processing means (an actual-production-status calculation processing section), which serves as another production-status-index calculation processing means (another production-status-index calculation processing section) of the CPU 31, performs actual-production-status calculation processing (another production-status-index calculation processing), to thereby calculate the actual production status τp. Unillustrated production-status-index transmission processing means (a production-status-index transmission processing section) of the CPU 31 performs production-status-index transmission processing to thereby transmit the scheduled progress status τf and the actual production status τp to the personal computer 20.

Incidentally, in the present embodiment, the scheduled progress status τf is calculated on the basis of the scheduled production number Nf and the molding cycle time Tm, and the production end time te is calculated through addition of the scheduled progress status τf to the present time tp. However, in the case where maintenance is regularly performed at an injection molding machine Mi or an anomaly occurs at the injection molding machine Mi, that injection molding machine Mi must be stopped while it is maintained or repaired.

In such a case, even when the calculated scheduled progress status τf is displayed by use of a bar graph element, the production cannot be completed at the production end time te, if maintenance, repair, or the like of the injection molding machine Mi is performed between the present time tp and the production end time te.

In view of the above, the present embodiment is configured such that, in consideration of possible performance of maintenance, repair, or the like of the injection molding machine Mi, molding is continued until the number of molded products reaches the scheduled total production number NT, even after the production end time te. The time over which molding is continued is determined as a continued production status $\tau\delta$, which serves a third production status index representing the production status, and the continued production status $\tau\delta$ is displayed while adding it to the scheduled progress status $\tau$f.

For such a display, unillustrated expected-stop-time calculation processing means (an expected-stop-time calculation processing section) of the CPU 24 performs expected-stop-time calculation processing so as to calculate an expected stop time Tc, which is a time over which operation of the injection molding machine Mi is expected to be stopped because of maintenance, repair, or the like.

Notably, the expected stop time Tc can be predicated or calculated in advance by an operator, and is recorded in the ROM 26 through operation of the operation section 12 or recorded in the ROM 33 through operation of the operation section 35. In this case, the expected-stop-time calculation processing means (the expected-stop-time calculation processing section) calculates the expected stop time Tc by reading it out from the ROM 26 or the ROM 33.

Further, the expected-stop-time calculation processing means can calculate the expected stop time Tc on the basis of actual values regarding the past maintenance, repair, or the like, or calculate the expected stop time Tc on the basis of a previously predicted or calculated value and the actual values regarding the past maintenance, repair, or the like.

For example, when a breakage anomaly of a heater occurs, the expected stop time Tc is set to 1 hour; when a grease supply anomaly occurs, the expected stop time Tc is set to 20 minutes; when a mold protection anomaly occurs, the expected stop time Tc is set to a predetermined value within a range of 5 to 10 minutes; and when a take-out machine chuck anomaly occurs, the expected stop time Tc is set to a predetermined value within a range of 5 to 10 minutes.

Further, when an injection molding machine Mi is stopped, an operator enters its reason by operating the operation section 35 of the injection molding machine Mi or the operation section 12 of the personal computer 20. In response thereto, the expected-stop-time calculation processing means can calculate the expected stop time Tc in accordance with the reason. In this case, the expected-stop-time calculation processing means can calculate the expected stop time Tc on the basis of actual values regarding the past stoppage, or calculate the expected stop time Tc on the basis of a previously predicted or calculated value and the actual values regarding the past stoppage.

For example, when a mold-releasing agent is applied, the expected stop time Tc is set to 5 minutes; when the ejector pin is replaced, the expected stop time Tc is set to 2 hours; and when the mold apparatus is dismantled and cleaned, the expected stop time Tc is set to 6 hours.

Further, the expected-stop-time calculation processing means can calculate the expected stop time Tc by a predetermined method. For example, the expected stop time Tc for the case of maintenance can be calculated from a scheduled number Nf of products to be molded in future, a maintenance interval Tsp at which maintenance is performed, and a maintenance time Tq required to perform maintenance each time.

$$Tc = (Nf/Tsp) \times Tq$$

Notably, the maintenance interval Tsp and the maintenance time Tq may be predicted in advance and recorded in the ROM 26, and then read out therefrom. Alternatively, the maintenance interval Tsp and the maintenance time Tq may be calculated on the basis of actual values regarding the past maintenance, or the recorded values and the calculated values may be combined.

Thus, the expected-stop-time calculation processing means can calculate the expected stop time Tc on the basis of actual values regarding the past maintenance, repair, or the like. Further, the expected-stop-time calculation processing means can calculate the expected stop time Tc on the basis of a previously predicted or calculated value and the actual values regarding the past maintenance, repair, or the like.

Further, unillustrated continued-production-status calculation processing means (a continued-production-status calculation processing section), which serves as third-production-status-index calculation processing means (a third-production-status-index calculation processing section), of the CPU 24 performs continued-production-status calculation processing (third-production-status-index calculation processing) so as to read the expected stop time Tc, and calculate the continued production status $\tau\delta$ by regarding the expected stop time Tc as the continued production status $\tau\delta$.

Subsequently, unillustrated predicted-production-end-time calculation processing means (a predicted-production-end-time calculation processing section) of the CPU 24 performs predicted-production-end-time calculation processing so as to calculate a predicted production end time tf by adding the scheduled progress status $\tau$f and the continued production status $\tau\delta$ to the time tp.

$$tf = tp + \tau f + \tau\delta$$

The display processing means then displays the continued production status $\tau\delta$ above and adjacent to the scheduled progress status $\tau f$ in a display mode different from those for the scheduled progress status $\tau f$ and the actual production status $\tau p$; in the present embodiment, by use of a bar graph element G3 of a different color (e.g., a bar graph element of yellow (third color)). In the present embodiment, the scheduled progress status $\tau f$ and the continued production status $\tau\delta$ are displayed to be located adjacent to each other in the vertical direction. However, they may be displayed to be located adjacent to each other in the left-right direction. For example, in the case where the length of the bar graph element G3 representing the continued production status $\tau\delta$ is short, if the continued production status $\tau\delta$ is displayed to be located adjacent to the scheduled progress status $\tau f$ in the vertical direction, checking of the bar graph element G3 becomes difficult. However, if the continued production status $\tau\delta$ is displayed to be located adjacent to the scheduled progress status $\tau f$ in the left-right direction, the bar graph element G3 can be readily checked.

Further, it is possible to display the scheduled progress status $\tau f$, the continued production status $\tau\delta$, etc. in the same color as the bar graph element G1, rather than as the bar graph element G3, and display only the contour of a portion related to the time of the continued production status $\tau\delta$ in a different color (e.g., yellow).

Next, a second embodiment of the present invention will be described. Notably, components having the same structures as those in the first embodiment are denoted by the same reference numerals. For the effect that the second embodiment yields through employment of the same structure, the description of the effect of the first embodiment is incorporated herein by reference.

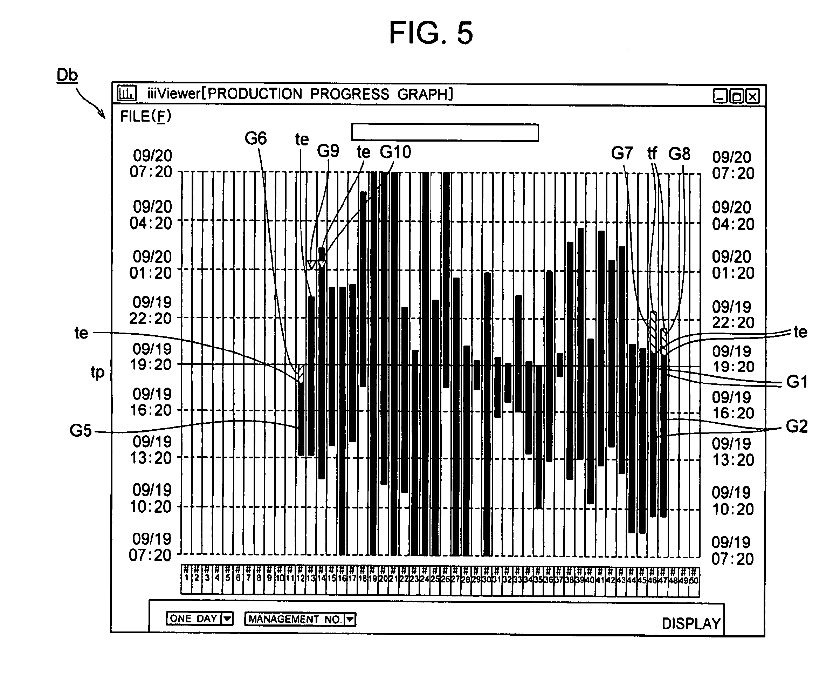

FIG. 5 is an illustration showing an example production progress display screen according to the second embodiment of the present invention.

In FIG. 5, above "#12" indicating the injection molding machine M12 (machine #12), the actual production status $\tau p$ is displayed by use of a bar graph element G5 (e.g., a bar graph element of blue). In this case, the actual production status $\tau p$ shows that the injection molding machine M12 started full-automatic operation at around 13:20 on September 19 and was scheduled to end the production at the production end time te around 17:50, which is approximately the middle between 16:20 and 19:20 on September 19.

Incidentally, if the injection molding machine Mi is automatically stopped when production of the scheduled total production number NT of products ends, resin stagnates within the heating cylinder 18 (FIG. 1), and resin burning or the like occurs. In order to avoid such a problem, in general, when the production of the scheduled total production number NT of products ends, a warning is generated so as to notify the operator of that fact, and the operation of the injection molding machine Mi is continued. Accordingly, in the case where the operator does not become aware of generation of such a warning; i.e., end of production at the injection molding machine Mi, even if the production is scheduled to end at the production end time te, the production is continued even after the production end time te and the products are produced excessively in some cases.

Further, in other cases, such as the case where the scheduled total production number NT is not changed in the scheduled-progress-status calculation processing even though the scheduled total production number NT was actually changed after start of the full-automatic operation, even if the production is scheduled to end at the production end time te, the production is continued even after the production end time te and the products are produced excessively in some cases. Notably, in such a case, the actual production status $\tau p$ becomes substantially longer than the scheduled progress status $\tau f$.

In view of the above, in the present embodiment, when the injection molding machine Mi continues production at the present time tp, an excessive production status $\tau ex$, which serves as a fourth production status index representing the production status, is displayed to be located above and adjacent to the actual production status $\tau p$.

For such a display, unillustrated operation determination processing means (an operation determination processing section) of the CPU 24 performs operation determination processing so as to determine whether or not each injection molding machine Mi is being operated at the present time tp, on the basis of a determination as to whether or not the molding cycle time Tm, the actual production number Np, etc. are transmitted from each injection molding machine Mi as actual values. When each injection molding machine Mi is being operated at the present time tp, unillustrated excessive-production determination processing means (an excessive-production determination processing section) of the CPU 24 performs excessive-production determination processing so as to determine whether or not excessive production occurs on the basis of a determination as to whether or not the present time is after the production end time te.

Subsequently, when excessive production has occurred, unillustrated excessive-production-status calculation processing means, which serves as fourth-production-status-index calculation processing means (a fourth-production-status-index calculation processing section), of the CPU 24 performs excessive-production-status calculation processing (fourth-production-status-index calculation processing) so as to calculate the time between the production end time te and the present time tp, as the excessive production status $\tau ex$.

The display processing means then displays the excessive production status $\tau ex$ above and adjacent to the actual production status $\tau p$ in a display mode different from that for the actual production status Tp; in the present embodiment, by use of a bar graph element G6 of a different color (e.g., a bar graph element of green (fourth color)).

As described above, in the present embodiment, the excessive production status $\tau ex$ is displayed

separately from the actual production status τf. Therefore, an operator can quickly grasp the occurrence of excessive production.

Incidentally, when molding is performed at each injection molding machine Mi, defective products may be produced. Therefore, in the case where the scheduled total production number NT is to be reached only by the number of non-defective products, preferably, the production is continued even after the production end time te passes, until the number of non-defective products reaches the scheduled total production number NT. In the present embodiment, in consideration of generation of defective products, even after the production end time te passes, the production is continued until the number of non-defective products reaches the scheduled total production number NT. The time over which molding is continued is determined as an additional production status τρ, which serves as a fifth production status index representing the production status, and the additional production status τρ is displayed while being added to the scheduled progress status τf.

For such a display, unillustrated defective-product-generation-time calculation processing means (a defective-product-generation-time calculation processing section) of the CPU 24 performs defective-product-generation-time calculation processing so as to read a non-defective product production ratio ε from the ROM 26, to read the scheduled progress status τf, the molding cycle time Tm and the scheduled production number Nf, and to calculate an estimated defective product generation time (production prediction) Tx; i.e., a time consumed to mold defective products, when generation of defective products is predicted.

$$Tx = τf - (ε \times Tm \times Nf)$$

$$= τf \times (1 - ε)$$

Notably, the above-described non-defective product production ratio ε is calculated in advance on the basis of the results of molding in a predetermined past period. That is, when the number of non-defective products in the predetermined past period is represented by Na and the number of defective products in the predetermined past period is represented by Nb, the non-defective product production ratio ε can be calculated as follows.

$$ε = Na / (Na + Nb)$$

In the present embodiment, the non-defective product production ratio ε is calculated in advance and recorded in the ROM 26. However, it is possible to record the number Na of non-defective products and the number Nb of defective products in the RAM 32 in advance, and to calculate the non-defective product production ratio ε by means of the CPU 31 at each injection molding machine Mi.

Then, unillustrated additional-production-status calculation processing means (an additional-production-status calculation processing section), which serves as fifth-production-status-index calculation processing means (a fifth-production-status-index calculation processing section), of the CPU 24 performs additional-production-status calculation processing (fifth-production-status-index calculation processing) so as to read the estimated defective product generation time Tx, and to calculate the additional production status τρ by regarding the estimated defective product generation time Tx as the additional production status τρ.

The predicted-production-end time calculation processing means calculates the predicted production end time tf by adding the scheduled progress status τf and the additional production status τρ to the present time tp.

$$tf = tp + τf + τρ$$

The display processing means then displays the additional production status τρ above and adjacent to the scheduled progress status τf in a display mode different from those for the scheduled progress status τf and the actual production status τp; in the present embodiment, by use of bar graph elements G7 and G8 of a different color (e.g., bar graph elements of yellow). Accordingly, it is possible to predict the end of production from the present time tp, and to display the predicted end of production.

For example, above "#46" and "#47" indicating the injection molding machines M46 and M47, the scheduled progress status τf of the injection molding machine M46 is displayed by the bar graph element G1, the actual production status τp is displayed by the bar graph element G2, and the additional production status τρ is displayed to be located above and adjacent to the scheduled progress status τf.

Notably, the display processing means can display the predicted production end time tf at a predetermined position of the production progress display screen Db by use of display elements such as numerals.

In such a case, since the predicted production end time tf can be calculated on the basis of not only the scheduled progress status Tf but also the past actual performance, it is possible to accurately grasp the predicted production end time tf and to determine at a glance whether the non-defective-product production ratio ε is high or low.

Incidentally, above "#46" and "#47" indicating the injection molding machines M46 and M47, the additional production status τρ is displayed by bar graph elements G7 and G8 in a color different from that of the bar graph element G1 representing the scheduled progress status τf. As shown in FIG. 5, at each of the injection molding machines M46 and M47, full-automatic operation was started before 10:20 on September 19, and the production end time te is displayed to be after 19:20 on September 19. Incidentally, when the injection molding machines M46 and M47 produce identical products under the same molding conditions, the bar graph element G7 representing the additional production status τρ of the injection molding machine M46 is displayed to be longer than the bar graph element G8 representing the additional production status τρ of the injection molding machine M47.

That is, it is possible to readily grasp that the non-defective product production ratio ε of the injection molding machine M47 is higher than that of the injection molding machine M46. Accordingly, an operator can increase the production efficiency by making the scheduled production number Nf of the injection molding machine M46 less than the scheduled production number Nf of the injection molding machine M47, and increasing the scheduled production number Nf of the injection molding machine M47 by a value by which the scheduled production number Nf of the injection molding machine M46 was reduced.

When time has passed and the present time passed the predicted production end time tf of the injection molding machine M46, for example, when the present time is 1:20 on September 20, "09/20 1:20" is displayed at the center axis of the bar graph. At that time, the bar graph element G7 representing the additional production status τρ is displayed below the "1:20 on September 20." However, it is displayed in the same color (e.g., yellow). Further, in this case, rather than displaying the additional production status τρ by the entirety of a bar graph element, the additional production status τρ may be displayed by displaying only the contour of the bar graph element in a different color (e.g., yellow), while displaying the inside of the bar graph element in the same color as that for the actual production status τp.

Here, there is assumed a case where the production is continued even after the injection molding machine M46 has achieved the target production number. In such a case, a bar graph element G6 (e.g., a bar graph element of green) of the excessive production status τex, which represents excessive production, is displayed above the bar graph element G7 representing the additional production status τρ. This is the same in the case of the scheduled progress status τf.

Further, when the production ends earlier than the additional production status τρ, the injection molding machine M46 continues the production even after it has achieved the target production number. In such a case, the excessive production status τex is displayed as a bar graph element G6 (e.g., a bar graph element of green) between the actual production status τp and the present time tp, and the bar graph element G7 of the additional production status τρ is displayed above the present time tp.

Further, in FIG. 5, delivery times G9 and G10, which serve as an additional production status index representing the production status, are displayed by use of a predetermined mark " ▽ " in the scheduled progress status display areas A3 for the injection molding machines M13 and M14 (FIG. 4). For such a display, unillustrated delivery-time calculation processing means (a delivery-time calculation processing section) of the CPU 24 performs delivery-time calculation processing so as to fetch a production schedule within the plant, which is previously set by use of a management scheduler function, and calculate the delivery times G9 and G10. The display processing means displays the delivery times G9 and G10 on the production progress display screen Db.

Moreover, FIG. 5 shows that the delivery times G9 and G10 of the injection molding machines M13 and M14 are just after 1:20 on September 19. In the case of the injection molding machine M13, the production end time te is earlier than the delivery time G9 and meets the delivery time G9. However, in the case of the injection molding machine M14, the production end time te is later than the delivery time G10 and does not meet the delivery time G10. In such a case, if the products molded at the injection molding machine M13 is the same as those molded at the injection molding machine M14, it is possible that the injection molding machine M13 produces additional products so as to make up for products that the injection molding machine M14 cannot produce by the delivery time.

As described above, since display of the delivery times G9 and G10 allows for management of each injection molding machine Mi on the scheduled progress status display area A3, production adjustment within the plant can be readily performed, and occurrence of delivery delay can be prevented.

In the above-described embodiments, the production status of each injection molding machine Mi is displayed on the display 13 of the personal computer 20. However, the production status may be displayed on the display 36 of each injection molding machine Mi. In this case, since an operator can grasp the production status at a working site where each injection molding machine Mi is disposed, without going to the place where the personal computer 20 is provided, the operator can quickly perform production adjustment.

In the above-described embodiments, the production status can be displayed in the form of a bar graph. However, the production status may be displayed by use of characters as well as bar graph elements.

That is, for example, when an operator moves a cursor onto a certain bar of the bar graph by operating the operation section 12 or the operation section 35, the above-described display processing means displays the production status of an injection molding machine Mi corresponding to the bar, at a predetermined location of the summary display screen Da, or in a pop-up window on the bar graph.

In such a case, molding conditions, mold name, molded product name, scheduled total production number NT, production start time ts, production end time te, scheduled stoppage time Tc, etc. are displayed as the production status.

INDUSTRIAL APPLICABILITY

The present invention is applicable to a molding-machine management system which manages a plurality of injection-molding machines.

**Claims**

1. A production status display apparatus (13, 36) for molding machines (Mi; M1-M30; M1-M50) comprising a screen (Da, Db), said display apparatus (13, 36) being connected to controllers (F1-F30) of a plurality of molding machines (Mi; M1-M30; M1-M50) and being configured to display

   (a) a plurality of molding machine identifiers (H1, A5) which identify the individual molding machines (Mi; M1-M30; M1-M50) on the screen (Da, Db); and
   (b) a scheduled progress status ($\tau f$) of each molding machine (Mi; M1-M30; M1-M50), which is determined on the basis of a molding cycle and a scheduled number of products to be produced from the present time, and is displayed on a common time axis while being related to the corresponding molding machine identifier (H1, A5), with the present time (tp) used as a reference.

2. A production status display apparatus for molding machines according to claim 1, wherein the display apparatus (13, 36) is configured such that an actual production status ($\tau p$, A4) based on an actual number of products produced by each molding machine (Mi; M1-M30; M1-M50) in a period from start of production to the present is displayed on the screen (Da, Db) to be located adjacent to the scheduled progress status (A3).

3. A production status display apparatus for molding machines according to claim 1, wherein the display apparatus (13, 36) is configured to display a production end time (te) which is calculated on the basis of the scheduled progress status ($\tau f$).

4. A production status display apparatus for molding machines according to claim 1, wherein the display apparatus (13, 36) is configured such that when production is continued after a time (tf) at which the actual production status ($\tau p$) reaches the scheduled number of products to be produced, an excessive production status is displayed.

5. A production status display apparatus for molding machines according to claim 1, wherein the display apparatus (13, 36) is configured to display a predicted end of production (tf) which is predicted in relation to the present time (tp) on the basis of a non-defective product production ratio in a predetermined past period.

6. A production status display apparatus for molding machines according to claim 1, wherein the display apparatus (13, 36) is configured to display a delivery time of products molded by each molding machine (Mi, M1-M30; M1-M50), while being related to each molding machine (Mi; M1-M30; M1-M50).

7. A production status display apparatus for molding machines according to claim 1, wherein the display apparatus (13, 36) is configured to display predicted end of production (tf) on the basis of a predicted stoppage time over which operation of each molding machine (Mi; M1-M30); M1-M50) is predicted to stop.

8. A production status display apparatus for molding machines according to any one of claims 1 to 7, wherein the display apparatus (13, 36) is configured to display the scheduled progress status ($\tau f$, A3) by use of a bar graph element, while being related to each molding machine (Mi; M1-M30; M1-M50).

9. A production status display method for molding machines (Mi, M1-M30; M1-M50) comprising the steps of:

   displaying, on a screen of a display apparatus (13, 36) connected to controllers (F1-F30) of a plurality of molding machines (Mi, M1-M30; M1-M50), molding machine identifiers (H1, A5) which identify the individual molding machines (Mi; M1-M30;M1-M50); and
   displaying, on a common time axis, a scheduled progress status ($\tau f$) of each molding machine (Mi; M1-M30, M1-M50), which is determined on the basis of a molding cycle and a scheduled number of products to be produced from the present time (tp), while being related to the corresponding molding machine identifier (H1, A5), with the present time (tp) used as a reference.

10. A production status display method for molding machines according to claim 9, wherein an actual production status ($\tau p$, A4) based on an actual number of products produced by each molding machine (Mi; M1-M30; M1-M50) in a period from start of production to the present is displayed on the screen (Da, Db) to be located adjacent to the scheduled progress status (A3).

11. A production status display method for molding machines according to claim 9, wherein a production end time (te) is displayed which is calculated on the basis of the scheduled progress status ($\tau$f).

12. A production status display method for molding machines according to claim 9, wherein when production is continued after a time (tf) at which the actual production status ($\tau$p) reaches the scheduled number of products to be produced, an excessive production status is displayed.

13. A production status display method for molding machines according to claim 9, wherein an end of production (tf) is predicted in relation to the present time (tp) on the basis of a non-defective product production ratio in a predetermined past period, and the predicted end of production (tf) is displayed.

14. A production status display method for molding machines according to claim 9, wherein a delivery time of products molded by each molding machine (Mi, M1-M30; M1-M50) is displayed, while being related to each molding machine (Mi; M1-M30; M1-M50).

15. A production status display method for molding machines according to claim 9, wherein end of production (tf) is predicted and displayed on the basis of a predicted stoppage time over which operation of each molding machine (Mi; M1-M30); M1-M50) is predicted to stop.

16. A production status display method for molding machines according to any one of claims 9 to 15, wherein the scheduled progress status ($\tau$f, A3) is displayed by use of a bar graph element, while being related to each molding machine (Mi; M1-M30; M1-M50).

**Patentansprüche**

1. Produktionsstatusanzeigevorrichtung (13, 36) für Formmaschinen (Mi; M1-M30; M1-M50), die einen Bildschirm (Da, Db) aufweisen, wobei die Anzeigevorrichtung (13, 36) mit den Steuervorrichtungen (F1-F30) einer Vielzahl von Formmaschinen (Mi; M1-M30; M1-M50) verbunden ist und konfiguriert ist, um Folgendes anzuzeigen:

   (a) eine Vielzahl von Formmaschinenkennungen (H1, A5), die die einzelnen Formmaschinen (Mi; M1-M30; M1-M50) auf dem Bildschirm (Da, Db) identifizieren; und
   (b) einen eingeteilten Fortschrittsstatus ($\tau$f) je-

der Formmaschine (Mi; M1-M30; M1-M50), der auf der Basis eines Formzyklus und einer planmäßigen Anzahl von Produkten, die zum gegenwärtigen Zeitpunkt erzeugt werden sollen, bestimmt wird und auf einer gemeinsamen Zeitachse angezeigt wird, während sie auf die entsprechende Formmaschinenkennung (H1, A5) bezogen sind, wobei der gegenwärtige Zeitpunkt (tp) als eine Referenz verwendet wird.

2. Produktionsstatusanzeigevorrichtung für Formmaschinen gemäß Anspruch 1, wobei die Anzeigevorrichtung (13, 36) so konfiguriert ist, dass ein tatsächlicher Produktionsstatus ($\tau$p, A4) basierend auf einer tatsächlichen Anzahl von Produkten, die durch jede Formmaschine (Mi; M1-M30; M1-M50) in einer Periode vom Start der Produktion zur Gegenwart produziert werden, auf dem Bildschirm (Da, Db) angezeigt wird, so dass er benachbart zu dem angesetzten Fortschrittsstatus (A3) angeordnet ist.

3. Produktionsstatusanzeigevorrichtung für Formmaschinen gemäß Anspruch 1, wobei die Anzeigevorrichtung (13, 36) konfiguriert ist, um einen Produktionsendzeitpunkt (te) anzuzeigen, der auf der Basis des angesetzten Fortschrittsstatus ($\tau$f) berechnet wird.

4. Produktionsstatusanzeigevorrichtung für Formmaschinen gemäß Anspruch 1, wobei die Anzeigevorrichtung (13, 36) so konfiguriert ist, dass wenn die Produktion nach einem Zeitpunkt (tf) fortgesetzt wird, an dem der tatsächliche Produktionsstatus ($\tau$p) die planmäßige Anzahl von Produkten, die produziert werden soll, erreicht, ein Überschussproduktionsstatus angezeigt wird.

5. Produktionsstatusanzeigevorrichtung für Formmaschinen gemäß Anspruch 1, wobei die Anzeigevorrichtung (13, 36) so konfiguriert ist, dass sie ein vorhergesagtes Ende der Produktion (tf) anzeigt, welches in Bezug auf den gegenwärtigen Zeitpunkt (tp) auf der Basis eines nicht fehlerhaften Produktproduktionsverhältnisses in einer vorbestimmten, vergangenen Periode vorhergesagt wird.

6. Produktionsstatusanzeigevorrichtung für Formmaschinen gemäß Anspruch 1, wobei die Anzeigevorrichtung (13, 36) so konfiguriert ist, dass sie eine Lieferzeit der Produkte anzeigt, die durch jede Formmaschine (Mi; M1-M30; M1-M50) geformt werden, während sie auf jede Formmaschine (Mi; M1-M30; M1-M50) bezogen sind.

7. Produktionsstatusanzeigevorrichtung für Formmaschinen gemäß Anspruch 1, wobei die Anzeigevorrichtung (13, 36) so konfiguriert ist, dass ein vorhergesagtes Ende der Produktion (tf) auf der Basis eines vorhergesagten Anhaltezeitpunkts angezeigt wird, über dem der Betrieb jeder Formmaschine (Mi; M1-M30; M1-M50) vorhergesagt ist anzuhalten.

8. Produktionsstatusanzeigevorrichtung für Formmaschinen gemäß einem der Ansprüche 1 bis 7, wobei die Anzeigevorrichtung (13, 36) so konfiguriert ist, dass sie den planmäßigen Fortschrittsstatus ($\tau$f, A3) durch Verwendung eines Säulendiagrammelements anzeigt, während dieser auf jede Formmaschine (Mi; M1-M30; M1-M50) bezogen ist.

9. Produktionsstatusanzeigeverfahren für Formmaschinen (Mi; M1-M30; M1-M50), das die folgenden Schritte aufweist:

   Anzeigen auf einem Bildschirm einer Anzeigevorrichtung (13, 36), die mit den Steuervorrichtungen (F1-F30) einer Vielzahl von Formmaschinen (Mi; M1-M30; M1-M50) verbunden ist, von Formmaschinenkennungen (H1, A5), die die einzelnen Formmaschinen (Mi; M1-M30; M1-M50) identifizieren; und Anzeigen auf einer gemeinsamen Zeitachse eines planmäßigen Fortschrittsstatus ($\tau$f) jeder Formmaschine (Mi; M1-M30; M1-M50), der auf der Basis eines Formzyklus und einer planmäßigen Anzahl von Produkten, die hergestellt werden sollen, von dem gegenwärtigen Zeitpunkt (tp) aus bestimmt wird, während dieser auf die entsprechende Formmaschinenkennung (H1, A5) bezogen ist, wobei der gegenwärtige Zeitpunkt (tp) als eine Referenz verwendet wird.

10. Produktionsstatusanzeigeverfahren für Formmaschinen gemäß Anspruch 9, wobei ein tatsächlicher Produktionsstatus ($\tau$p, A4) basierend auf einer tatsächlichen Anzahl von Produkten, die durch jede Formmaschine (Mi; M1-M30; M1-M50) in einer Periode vom Start der Produktion zur Gegenwart hergestellt werden sollen, auf dem Bildschirm (Da, Db) so angezeigt wird, dass dieser benachbart zu dem planmäßigen Fortschrittsstatus (A3) gelegen ist.

11. Produktionsstatusanzeigeverfahren für Formmaschinen gemäß Anspruch 9, wobei ein Produktionsendzeitpunkt (te) angezeigt wird, der auf der Basis des planmäßigen Fortschrittsstatus ($\tau$f) berechnet wird.

12. Produktionsstatusanzeigeverfahren für Formmaschinen gemäß Anspruch 9, wobei wenn die Produktion nach einem Zeitpunkt (tf) fortgesetzt wird, an dem der tatsächliche Produktionsstatus ($\tau$p) die planmäßige Anzahl von Produkten, die hergestellt werden soll, erreicht, ein Überschussproduktionsstatus angezeigt wird.

13. Produktionsstatusanzeigeverfahren für Formmaschinen gemäß Anspruch 9, wobei ein Ende der Produktion (tf) in Bezug auf den gegenwärtigen Zeitpunkt (tp) auf der Basis eines nicht fehlerhaften Produktproduktionsverhältnisses in einer vorbestimmten, vergangenen Periode vorhergesagt wird, und das vorhergesagte Ende der Produktion (tf) wird angezeigt.

14. Produktionsstatusanzeigeverfahren für Formmaschinen gemäß Anspruch 9, wobei ein Lieferzeitpunkt der Produkte, die durch jede Formmaschine (Mi; M1-M30; M1-M50) geformt werden, angezeigt wird, während dieser in Bezug zu jeder Formmaschine (Mi; M1-M30; M1-M50) steht.

15. Produktionsstatusanzeigeverfahren für Formmaschinen gemäß Anspruch 9, wobei ein Produktionsende (tf) vorgesagt und auf der Basis eines vorhergesagten Anhaltezeitpunkts angezeigt wird, über den der Betrieb jeder Formmaschine (Mi; M1-M30; M1-M50) vorgesagt ist anzuhalten.

16. Produktionsstatusanzeigeverfahren für Formmaschinen gemäß irgendeinem der Ansprüche 9 bis 15, wobei der planmäßige Fortschrittsstatus ($\tau$f, A3) durch Verwendung eines Balkendiagrammelements angezeigt wird, während er auf jede Formmaschine (Mi; M1-M50) bezogen wird.

**Revendications**

1. Dispositif (13, 36) d'affichage d'état de production de machines de moulage (Mi ; M1-M30 ; M1-M50) comprenant un écran (Da, Db), ce dispositif d'affichage (13, 36) étant connecté à des contrôleurs (F1-F30) d'une pluralité de machines de moulage (Mi ; M1-M30 ; M1-M50) et étant agencé pour afficher :

   (a) une pluralité d'identificateurs (H1, A5) de machine de moulage qui identifient les machines de moulage (Mi ; M1-M30 ; M1-M50) individuelles sur l'écran (Da, Db); et
   (b) un état de progression programmé ($\tau$f) de chaque machine de moulage (Mi ; M1-M30 ; Mi-M50) qui est déterminé sur la base d'un cycle de moulage et d'un nombre programmé de produits à produire à partir de l'instant présent, et est affiché sur un axe temporel commun tout en étant associé à l'identificateur de machine de moulage (H1, A5) correspondant, le temps présent (tp) étant utilisé comme référence.

2. Dispositif d'affichage d'état de production de machines de moulage selon la revendication 1, dans lequel le dispositif d'affichage (13, 36) est agencé de sorte qu'un état de production réel ($\tau$p, A4) basé sur un nombre réel de produits produits par chaque machine de moulage (Mi ; M1-M30 ; M1-M50) pendant une période partant du début de la production jusqu'à l'instant présent est affiché sur l'écran (Da, Db) pour être disposé de façon adjacente à l'état de progression programmé (A3).

3. Dispositif d'affichage d'état de production de machines de moulage selon la revendication 1, dans lequel le dispositif d'affichage (13, 36) est agencé pour afficher un instant de fin de production (te) qui est calculé sur la base de l'état de progression programmé (τf).

4. Dispositif d'affichage d'état de production de machines de moulage selon la revendication 1, dans lequel le dispositif d'affichage (13, 36) est agencé de sorte que, quand la production est poursuivie après un instant (tf) auquel l'état de production réel (τp) atteint le nombre programmé de produits à produire, un état de production excessif est affiché.

5. Dispositif d'affichage d'état de production de machines de moulage selon la revendication 1, dans lequel le dispositif d'affichage (13, 36) est agencé pour afficher une fin prédite de production (tf) qui est prédite en relation avec l'instant présent (tp) sur la base d'un taux de production de produits non défectueux au cours d'une période antérieure prédéterminée.

6. Dispositif d'affichage d'état de production de machines de moulage selon la revendication 1, dans lequel le dispositif d'affichage (13, 36) est agencé pour afficher un instant de fourniture de produits moulés par chaque machine de moulage (Mi ; M1-M30 ; Mi-M50), associé à chaque machine de moulage (Mi ; M1-M30 ; M1-M50).

7. Dispositif d'affichage d'état de production de machines de moulage selon la revendication 1, dans lequel le dispositif d'affichage (13, 36) est agencé pour afficher une fin prédite de production (tf) sur la base d'un instant d'arrêt prédit auquel le fonctionnement de chaque machine de moulage (Mi ; M1-M30 ; M1-M50) est prévu pour s'arrêter.

8. Dispositif d'affichage d'état de production de machines de moulage selon l'une quelconque des revendications 1 à 7, dans lequel le dispositif d'affichage (13, 36) est agencé pour afficher l'état de progression programmé (τf, A3) en utilisant un élément de graphique à barre, tout en étant associé à chaque machine de moulage (Mi ; M1-M30 ; M1-M50).

9. Procédé d'affichage d'un état de production pour des machines de moulage (Mi ; M1-M30 ; M1-M50) comprenant les étapes suivantes :

afficher sur un écran d'un dispositif d'affichage (13, 36) connecté à des contrôleurs (F1-F30) d'une pluralité de machines de moulage (Mi ; M1-M30 ; M1-M50), des identificateurs de machine de moulage ((H1, A5) qui identifient les machines de moulage (Mi ; M1-M30 ; M1-M50) individuelles ; et

afficher sur un axe temporel commun un état de progression programmé (τf) de chaque machine de moulage (Mi ; M1-M30 ; M1-M50) qui est déterminé sur la base d'un cycle de moulage et d'un nombre programmé de produits à produire à partir de l'instant présent (tp), tout en étant associé à l'identificateur de machine de moulage correspondant (H1, A5), l'instant présent (tp) étant utilisé à titre de référence.

10. Procédé d'affichage d'un état de production pour des machines de moulage selon la revendication 9, dans lequel l'état de production réel (τp, A4) basé sur un nombre réel de produits produits par chaque machine de moulage (Mi ; M1-M30 ; M1-M50) pendant une période partant du début de la production jusqu'à l'instant présent est affiché sur l'écran (Da, Db) pour être disposé de façon adjacente à l'état de progression programmé (A3).

11. Procédé d'affichage d'un état de production pour des machines de moulage selon la revendication 9, dans lequel un instant de fin de production (te) calculé sur la base de l'état de progression programmé (τf) est affiché.

12. Procédé d'affichage d'un état de production pour des machines de moulage selon la revendication 9, dans lequel, quand la production est poursuivie après un instant (tf) auquel l'état de production réel (τp) atteint le nombre programmé de produits à produire, un état de production excessive est affiché.

13. Procédé d'affichage d'un état de production pour des machines de moulage selon la revendication 9, dans lequel une fin de production (tf) est prédite en relation avec l'instant présent (tp) sur la base d'un taux de production de produits non défectueux au cours d'une période antérieure prédéterminée, et la fin prédite de production (tf) est affichée.

14. Procédé d'affichage d'un état de production pour des machines de moulage selon la revendication 9, dans lequel un instant de fourniture de produits moulés par chaque machine de moulage (Mi ; M1-M30 ; M1-M50) est affiché tout en étant associé à chaque machine de moulage (Mi ; M1-M30 ; M1-M50).

15. Procédé d'affichage d'un état de production pour des machines de moulage selon la revendication 9, dans lequel une fin de production (tf) est prédite et affichée sur la base d'un instant d'arrêt prédit auquel le fonctionnement de chaque machine de moulage (Mi ; M1-M30 ; M1-M50) est prévu pour s'arrêter.

16. Procédé d'affichage d'un état de production pour des machines de moulage selon l'une quelconque des revendications 9 à 15, dans lequel l'état de progression programmé ($\tau$f, A3) est affiché en utilisant un élément de graphique à barre, tout en étant associé à chaque machine de moulage (Mi ; M1-M30 ; M1-M50).

# FIG. 1

EP 1 927 912 B1

# FIG. 2

# FIG. 3

Da

p2 p3 AR2

k1

PRODUCTION STATUS DISPLAY

p1

AR1

p4
p5
AR7

AR13

AR19

AR25

AR30

| MACHINE #1 | MACHINE #2 | MACHINE #3 | MACHINE #4 | MACHINE #5 | MACHINE #6 |
| MACHINE #7 | MACHINE #8 | MACHINE #9 | MACHINE #10 | MACHINE #11 | MACHINE #12 |
| MACHINE #13 | MACHINE #14 | MACHINE #15 | MACHINE #16 | MACHINE #17 | MACHINE #18 |
| MACHINE #19 | MACHINE #20 | MACHINE #21 | MACHINE #22 | MACHINE #23 | MACHINE #24 |
| MACHINE #25 | MACHINE #26 | MACHINE #27 | MACHINE #28 | MACHINE #29 | MACHINE #30 |

EP 1 927 912 B1

# FIG. 4

Db

iiiViewer[PRODUCTION PROGRESS GRAPH]

FILE(F)

EP 1 927 912 B1

ONE DAY ▼    MANAGEMENT NO. ▼    DISPLAY

L3   G2   L4  H1   ts        A5

# FIG. 5

Db

iiiViewer[PRODUCTION PROGRESS GRAPH]

FILE(F)

G6  te  G9  te G10                                    G7  tf  G8

| 09/20 07:20 | | 09/20 07:20 |
| 09/20 04:20 | | 09/20 04:20 |
| 09/20 01:20 | | 09/20 01:20 |
| 09/19 22:20 | | 09/19 22:20 |

te

tp

09/19 19:20

G5

09/19 16:20

09/19 13:20

09/19 10:20

09/19 07:20

te

G1

G2

#1 #2 #3 #4 #5 #6 #7 #8 #9 #10 #11 #12 #13 #14 #15 #16 #17 #18 #19 #20 #21 #22 #23 #24 #25 #26 #27 #28 #29 #30 #31 #32 #33 #34 #35 #36 #37 #38 #39 #40 #41 #42 #43 #44 #45 #46 #47 #48 #49 #50

ONE DAY ▼   MANAGEMENT NO. ▼                                    DISPLAY

EP 1 927 912 B1

**EP 1 927 912 B1**

**REFERENCES CITED IN THE DESCRIPTION**

**Patent documents cited in the description**

- JP 2003001686 A
- JP 2004167962 A
- JP 2002318610 A